(19) Europäisches Patentamt
European Patent Office
Office européen des brevets

(11) EP 2 655 481 B1

(12) # EUROPÄISCHE PATENTSCHRIFT

(45) Veröffentlichungstag und Bekanntmachung des Hinweises auf die Patenterteilung:
**11.03.2015 Patentblatt 2015/11**

(21) Anmeldenummer: **11802913.1**

(22) Anmeldetag: **19.12.2011**

(51) Int Cl.:
***C08G 77/388*** *(2006.01)* ***C08G 77/445*** *(2006.01)*
***C08G 77/46*** *(2006.01)* ***C08J 3/03*** *(2006.01)*
***C08L 83/12*** *(2006.01)*

(86) Internationale Anmeldenummer:
**PCT/EP2011/073241**

(87) Internationale Veröffentlichungsnummer:
**WO 2012/084826 (28.06.2012 Gazette 2012/26)**

(54) **SILICONASPARAGINAT-COPOLYMERE**
SILICONE ASPARTATE COPOLYMERS
COPOLYMÈRE DE SILICONASPARAGINATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2010 DE 102010063737**

(43) Veröffentlichungstag der Anmeldung:
**30.10.2013 Patentblatt 2013/44**

(73) Patentinhaber: **Wacker Chemie AG
81737 München (DE)**

(72) Erfinder: **HERZIG, Christian
83329 Waging (DE)**

(74) Vertreter: **Deffner-Lehner, Maria et al
Wacker Chemie AG
Zentralbereich Patente, Marken und Lizenzen
Hanns-Seidel-Platz 4
81737 München (DE)**

(56) Entgegenhaltungen:
**US-A- 4 814 392**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 655 481 B1

Printed by Jouve, 75001 PARIS (FR)

**Beschreibung**

Die Erfindung betrifft Silicon-Copolymere und ein Verfahren zu ihrer Herstellung.

Silicone mit organischen Polymeren zu verbinden ist ein vergleichsweise schwieriges Problem, das hohe Anforderungen an die Reaktionsführung stellt. Eine gängige Methode zur Siliconcopolymerherstellung ist die Herstellung von Siliconpolyethern aus ungesättigten Polyethern und Hydrogensiloxanen mittels Hydrosilylierung, die aber nur zufriedenstellend durchführbar ist, wenn die hohen Anforderungen an die Reinheit der Rohstoffe und Einstellung enger Reaktionsbedingungen eingehalten werden. Haupthindernis ist die enorme Unverträglichkeit der Startkomponenten, wodurch die Umsetzungsgeschwindigkeit erheblich herabgesetzt wird. Die teuren Edelmetallkatalysatoren sind ein weiterer Nachteil.

Neben diesem katalytischen Prozess gibt es kaum Synthesemethoden, mit denen sich hydrophobe Siloxane mit hydrophilen organischen Polymeren in einer glatt ablaufenden Reaktion gut verbinden lassen. Am ehesten gelingt dies noch in der Addition von Acetoacetatpolyethern oder Acrylatpolyethern an Aminosiloxane. In beiden Fällen sind die Reaktionszeiten aufgrund der geringen Löslichkeit der Rohstoffe ineinander - recht lang.

US 6,664,342 B1 beschreibt die Anlagerung von neutralen Maleinsäurediestern an Aminosiloxane. Diese Maleinsäurediester sind Ester mit $C_1$-$C_4$-Alkoholen, die im Siloxan klar löslich sind und damit im Siloxan homogen verteilt sind. Trotzdem werden Reaktionszeiten von 1 bis 10 Stunden bei 80 bis 220°C benötigt. Außerdem muss der erforderliche Überschuss an Diester nach Reaktionsende abdestilliert werden. Es werden asparaginsäureesterfunktionelle Silicone erhalten, Copolymere werden auf diese Weise nicht erhalten.

US 5,990,334 A beschreibt zwar Siloxane, die Säuregruppen enthalten und die durch Addition von sauren organischen Verbindungen, die Doppelbindungen enthalten, an Aminosiloxane erhalten werden. Die C=C-Doppelbindungen sind aber als Acrylate definiert, die die Säuregruppe im Carbinol-teil enthalten. Solche Edukte sind aufwändig herzustellen und müssen gegen Eigenpolymerisation mit Stabilisatoren geschützt werden.

EP 324 595 B1 beschreibt die Verwendung von monomeren Maleinsäurehalbestern, an die Aminoverbindungen angelagert werden. Die Amine sind aber monomere organische Verbindungen mit primären oder sekundären Amingruppen, die sich homogen in den monomeren Halbestern lösen. Die bei diesem Verfahren eingesetzten monomeren organischen Edukte sind miteinander verträglich, da sie keinen Siliconbestandteil enthalten. Siliconcopolymere können auf diesem Weg daher nicht erhalten werden.

US 4,814,392 A offenbart die Reaktion aus Maleinsäure terminiertem Polyphenylether mit Amin terminiertem Polysiloxan bei 300°C, so dass ein Copolymer aus rein aromatischem Polyether, welcher über eine Imid-Einheit mit einem Polysiloxan verknüpft ist, entsteht.

Es bestand die Aufgabe Silicon-Copolymere bereitzustellen, die in einem einfachen Verfahren, unter milden Reaktionsbedingungen, in hohen Ausbeuten, ohne Verwendung von Stabilisatoren und insbesondere ohne Einsatz von Katalysatoren aus Siliconpolymeren und organischen Polymeren, insbesondere hydrophilen organischen Polymeren, wie Polyethern, erhalten werden. Die Aufgabe wird durch die Erfindung gelöst.

Gegenstand der Erfindung ist ein Verfahren zur Herstellung von Siliconasparaginat-Copolymere, indem in einem ersten Schritt ein mindestens eine Hydroxygruppe aufweisendes organisches Polymer (1) der allgemeinen Formel

$$R^6\text{-[O-CH}_2\text{-CH(CH}_3\text{)]}_x\text{-[O-CH}_2\text{-CH}_2\text{]}_y\text{-O-H} \qquad (V),$$

wobei

R ein einwertiger Kohlenwasserstoffrest mit 1 bis 18 C-Atomen,
$R^6$ ein Wasserstoffatom, ein Rest R oder ein Rest der Formel $R^7$-C(O)- bedeutet,
$R^7$ einen $C_1$-$C_{18}$-Alkylrest bedeutet,
x 0 oder eine ganze Zahl von 1 bis 100 und
y 0 oder eine ganze Zahl von 1 bis 100 ist,

mit der Maßgabe, dass die Summe x+y mindestens 3, vorzugsweise 8 bis 80 ist,
mit Maleinsäureanhydrid (2)

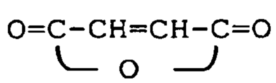 (I)

umgesetzt wird,
mit der Maßgabe, dass Maleinsäureanhydrid (2) in Mengen von 0,5 bis 1,1 Mol je Mol Hydroxygruppe (-OH) im Polymer (1) eingesetzt wird,

wobei ein Maleinsäurehalbester (3) der Formel

$$HO\text{-}(O{=})C\text{-}CH{=}CH\text{-}C({=}O)\text{-}O\text{-}[CH_2\text{-}CH_2\text{-}O]_y\text{-}[CH(CH_3)\text{-}CH_2\text{-}O]_x\text{-}R^6 \quad (VI)$$

erhalten wird,
wobei $R^6$, x und y die oben dafür angegebene Bedeutung haben, und in einem zweiten Schritt der aus dem ersten Schritt erhaltene Maleinsäurehalbester (3) mit einem mindestens eine primäre oder sekundäre Aminogruppe (-NH-) aufweisendem Organopolysiloxan (4) umgesetzt wird,
wobei die primäre oder sekundäre Aminogruppe eine Si-C gebundene Gruppe X der allgemeinen Formel

$$-R^2\text{-}[NR^3\text{-}R^4\text{-}]_gNHR^3 \quad (VII)$$

ist, wobei

- $R^2$ ein zweiwertiger linearer oder verzweigter Kohlenwasserstoffrest mit 1 bis 18 Kohlenstoffatomen bedeutet,
- $R^3$ ein Wasserstoffatom oder einen einwertigen Kohlenwasserstoffrest mit 1 bis 18 C-Atomen, vorzugsweise einen $C_1$-$C_4$-Alkylrest, oder einen Acylrest bedeutet, bevorzugt ein Wasserstoffatom ist,
- $R^4$ ein zweiwertiger Kohlenwasserstoffrest mit 1 bis 6 Kohlenstoffatomen bedeutet,
- g 0, 1, 2, 3 oder 4, vorzugsweise 0 oder 1, ist,

mit der Maßgabe, dass das Organopolysiloxan (4) in Mengen von 1 bis 10 Mol, vorzugsweise 1 bis 3 Mol, Aminogruppe (-NH-) in (4) je Mol C=C-Doppelbindung im Maleinsäurehalbester (3) eingesetzt wird,
wobei Siliconasparaginat-Copolymere erhalten werden, die je Molekül mindestens eine Asparaginatverbindungsgruppe **Y** ausgewählt aus der Gruppe der Formeln

$$(\Xi Si)\ \text{-}R^2\text{-}\ [NR^3\text{-}R^4\text{-}]_gNR^3\text{-}CH(\text{-}CO_2H)\text{-}CH_2\text{-}CO_2\text{-}[CH_2\text{-}CH_2\text{-}O]_y\text{-}[CH(CH_3)\text{-}CH_2\text{-}O]_x\text{-} \quad (X)$$

$$(\Xi Si)\ \text{-}R^2\text{-}\ [NR^3\text{-}R^4\text{-})_gNR^3\text{-}CH(\text{-}CH_2\text{-}CO_2H)\text{-}CO_2\text{-}[CH_2\text{-}CH_2\text{-}O]_y\text{-}[CH(CH_3)\text{-}CH_2\text{-}O]_x\text{-} \quad (X')$$

und deren Mischungen
enthalten, wobei

$R^2$, $R^3$, $R^4$, g, x und y die oben dafür angegebene Bedeutung haben und

(Si≡) eine Verknüpfung über eine Si-C-Bindung zum Organopolysiloxan anzeigt.

Beispiele für einwertige Kohlenwasserstoffreste R mit 1 bis 18 C-Atomen sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.
Im Rahmen dieser Erfindung soll Formel (V) so verstanden werden, dass x Einheiten $-(O\text{-}CH_2\text{-}CH(CH_3)]-$ und y Einheiten $-[O\text{-}CH_2\text{-}CH_2]-$ in beliebiger Weise im Polyethermolekül verteilt sein können.
Bevorzugt ist $R^6$ ein Wasserstoffatom, oder ein Kohlenwasserstoffrest R mit 1 bis 8 C-Atomen. Wenn $R^6$ ein Kohlenwasserstoffrest R ist, ist $R^6$ vorzugsweise ein $C_1$-$C_8$-Alkylrest.
Die organischen Polymere (1) können mono- oder difunktionell sein. Die organischen Polymere (1) werden nach allgemein bekannten Verfahren hergestellt.
Werden monofunktionelle Polymere (1), also solche mit einer Hydroxygruppe, bevorzugt monofunktionelle Polyether, eingesetzt, wird Maleinsäureanhydrid vorzugsweise in Mengen von 0,8 bis 1,1 Mol je Mol Hydroxygruppe (-OH) in (1) eingesetzt. Werden difunktionelle Polymere (1), also solche mit zwei Hydroxygruppen, bevorzugt difunktionelle Polyether, eingesetzt, wird Maleinsäureanhydrid vorzugsweise in Mengen von 0,5 bis 1,0 Mol je Mol Hydroxygruppe (-OH) in (1) eingesetzt.
Im ersten Schritt des erfindungsgemäßen Verfahrens werden bei Einsatz monofunktioneller Polymere (1) vorzugsweise 80 bis 100 % der OH-Gruppen verestert, bei Einsatz von difunktionellen Polymeren werden vorzugsweise

40 bis 100 % der OH-Gruppen verestert.

Der erste Verfahrensschritt wird vorzugsweise in Gegenwart von tertiären Aminen durchgeführt. Beispiele für tertiäre Amine sind Trimethylamin, Triethylamin, Tripropylamin, Tributylamin, Dimethylethylamin, Dimethylisopropylamin, Diethylisopropylamin, Dimethylcyclohexylamin, Diethylbutylamin, Triisooctylamin und Methylmorpholin.

Der erste Schritt des erfindungsgemäßen Verfahrens wird vorzugsweise bei einer Temperatur von 20 bis 140°C, bevorzugt bei 40 bis 120°C, besonders bevorzugt 50 bis 100°C, durchgeführt und erfolgt vorzugsweise beim Druck der umgebenden Atmosphäre, also bei ca. 1020 hPa, kann aber auch bei höheren oder niedrigeren Drücken durchgeführt werden.

Im ersten Schritt des erfindungsgemäßen Verfahrens werden Maleinsäurehalbester (3) von hydroxyfunktionellen Polymeren erhalten.

Wird beispielsweise im ersten Schritt des erfindungsgemäßen Verfahrens Maleinsäureanhydrid mit monofunktionellen Polyethern der Formel (V) (mit $R^6$=R in Formel (V)) umgesetzt, werden Maleinsäurehalbester der Formel

$$HO\text{-}(O{=})C\text{-}CH{=}CH\text{-}C({=}O)\text{-}O\text{-}[CH_2CH_2O]_y\text{-}[CH(CH_3)CH_2O]_x\text{-}R \qquad (VI'),$$

erhalten, wobei R, x und y die oben dafür angegebene Bedeutung haben.

Diese Maleinsäurehalbester (3) werden im zweiten Schritt des erfindungsgemäßen Verfahrens mit Organopolysiloxanen (4), die mindestens eine primäre oder sekundäre Aminogrupp aufweisen, umgesetzt.

Die primäre oder sekundäre Aminogruppe im Organopolysiloxan (4) ist eine Si-C gebundene Gruppe **X** der allgemeinen Formel

$$-R^2\text{-}[NR^3\text{-}R^4\text{-}]_gNHR^3 \qquad (VII),$$

wobei

$R^2$ ein zweiwertiger linearer oder verzweigter Kohlenwasserstoffrest mit 1 bis 18 Kohlenstoffatomen bedeutet,

$R^3$ ein Wasserstoffatom oder einen einwertigen Kohlenwasserstoffrest mit 1 bis 18 C-Atomen, vorzugsweise einen $C_1$-$C_4$-Alkylrest, oder einen Acylrest bedeutet, bevorzugt ein Wasserstoffatom ist,

$R^4$ ein zweiwertiger Kohlenwasserstoffrest mit 1 bis 6 Kohlenstoffatomen bedeutet, und

g 0, 1, 2, 3 oder 4, vorzugsweise 0 oder 1, ist.

Die Organopolysiloxane (4) können zusätzlich zu den primären und sekundären Aminogruppen auch tertiäre Aminogruppen enthalten oder auch Alkoxy- oder Hydroxygruppen enthalten, die aber an der Verknüpfungsreaktion von (3) mit (4) nicht teilnehmen, gegebenenfalls aber eine Kondensation der primär gebildeten Siliconasparaginat-Copolymere zu größeren Polymeren unterstützen.

Vorzugsweise werden als Organopolysiloxane (4) solche der allgemeine Formel

$$X_aR_b(R'O)_cSiO_{\frac{4-(a+b+c)}{2}} \qquad (VIII)$$

eingesetzt, wobei

X die oben dafür angegebene Bedeutung hat,

R ein einwertiger Kohlenwasserstoffrest mit 1 bis 18 C-Atomen bedeutet,

R' ein Wasserstoffatom oder einen einwertigen Kohlenwasserstoffrest mit 1 bis 18 C-Atomen, vorzugsweise einen $C_1$-$C_4$-Alkylrest, bedeutet,

a 0 oder 1 ist,

b 0, 1, 2, oder 3 ist,

c 0 oder 1 ist,

mit der Maßgabe, dass die Summe a+b+c≤3 ist und dass die Organopolysiloxane mindestens einen Rest X je Molekül enthalten.

Bevorzugt werden als Organopolysiloxane (4) solche der allgemeinen Formel

$$X_kR^*_{3-k}SiO(R_2SiO)_m(XR^*SiO)_nSiR^*_{3-k}X_k \qquad (IX)$$

eingesetzt, wobei

X die oben dafür angegebene Bedeutung hat,
R* R oder ein Rest der Formel -OR' bedeutet, wobei R und R' die oben dafür angegebene Bedeutung haben,
k 0 oder 1 ist,
m 0 oder eine ganze Zahl von 1 bis 1000 ist,
n 0 oder eine ganze Zahl von 1 bis 50 ist,

mit der Maßgabe, dass die Organopolysiloxane mindestens einen Rest X je Molekül enthalten.

Bevorzugte Beispiele für Reste X sind Reste der Formeln

$H_2N(CH_2)_3$-

$H_2N\ (CH_2)_2NH\ (CH_2)_3$-

$H_2N\ (CH_2)_2NH(CH_2)CH\ (CH_3)CH_2$-

(Cyclohexyl) NH $(CH_2)_3$-

$CH_3NH(CH_2)_3$-

$(CH_3)_2N(CH_2)_3$-

$CH_3CH_2NH(CH_2)_3$-

$(CH_3CH_2)_2N(CH_2)_3$-

$CH_3NH(CH_2)_2NH(CH_2)_3$-

$(CH_3)_2N(CH_2)_2NH(CH_2)_3$-

$CH_3CH_2NH(CH_2)_2NH(CH_2)_3$-

$(CH_3CH_2)_2N(CH_2)_2NH(CH_2)_3$-

und deren teilacetylierte Formen.

Besonders bevorzugte Beispiele für Reste X sind Reste der Formeln

$H_2N(CH_2)_3$-

$H_2N(CH_2)_2NH(CH_2)_3$-

(Cyclohexyl)NH$(CH_2)_3$-

(Acetyl) -NH $(CH_2)_2NH(CH_2)_3$-

$H_2N(CH_2)_2N$(Acetyl) $(CH_2)_3$-

Bevorzugt hat der Rest R* die Bedeutung von R.

Die Organopolysiloxane (4) weisen vorzugsweise eine Viskosität von 50 bis 50 000 mPa.s bei 25°C, bevorzugt von 200 bis 20 000 mPa.s bei 25°C, auf und haben vorzugsweise einen Amingehalt von 0,02 bis 1,0 mEquiv/g, bevorzugt 0,05 bis 0,8 mEquiv/g, was einer Aminzahl von vorzugsweise 0,02 bis 1,0, bevorzugt 0,05 bis 0,8, entspricht.

Der zweite Schritt des erfindungsgemäßen Verfahrens wird vorzugsweise bei einer Temperatur von 20° bis 100°C, bevorzugt bei 40° bis 80°C, durchgeführt und erfolgt vorzugsweise beim Druck der umgebenden Atmosphäre, also bei ca. 1020 hPa, kann aber auch bei höheren oder niedrigeren Drücken durchgeführt werden.

Die Bildung der Asparaginatgruppen durch Addition der Aminogruppen (-NH-) in (4) an die C=C-Doppelbindung in (3), die sogenannte Hydroaminierung, erfolgt unter milden Bedingungen in wenigen Stunden in hoher Ausbeute.

Diese Additionsreaktion verbindet hydrophobes Siloxanpolymer mit einem eher hydrophilen Polymer, wie Polyether. Katalysatoren werden hierfür nicht benötigt.

Da die Viskosität der erfindungsgemäßen Siliconasparaginat-Copolymere aufgrund ihrer polaren Struktur sehr

hoch ist, wird die Additionsreaktion im zweiten Verfahrensschritt vorzugsweise in einem organischen Lösungsmittel als Verdünnungsmittel ausgeführt.
Beispiele für organische Lösungsmittel sind Alkohole, wie Methanol, Ethanol, n-Propanol, iso-Propanol und Glycole, wie Ethylenglycol und Diethylenglycol und Glycolether, wie Diethylenglycolmonobutylether.
Organische Lösungsmittel werden dabei in Mengen von vorzugsweise 20 bis 200 Gew.-teile, bevorzugt 25 bis 100 Gew.-teile je 100 Gew.-teile erhaltenes Siliconasparaginat-Copolymere eingesetzt.

Die Additionsreaktion kann auch in Gegenwart von Wasser durchgeführt werden. Hierbei wird der Maleinsäurehalbester (3) in Wasser gelöst und das Organopolysiloxan (4) vorzugsweise verdünnt in organischen Lösungsmitteln zudosiert. Es wird dabei eine wässrige Emulsion eines Siliconasparaginat-Copolymere erhalten.

Beim erfindungsgemäßen Verfahren werden Siliconasparaginat-Copolymere mit Asparaginatverbindungsgruppen zwischen dem Silicon- und dem organischen Polymerteil erhalten.
Gegenstand der Erfindung sind daher Siliconasparaginat-Copolymere, die je Molekül mindestens eine Asparaginatverbindungsgruppe Y ausgewählt aus der Gruppe der Formeln

$$(\equiv Si)\text{-}R^2\text{-}[NR^3\text{-}R^4\text{-}]_gNR^3\text{-}CH(\text{-}CO_2H)\text{-}CH_2\text{-}CO_2\text{-}[CH_2\text{-}CH_2\text{-}O]_y\text{-}[CH(CH_3)\text{-}CH_2\text{-}O]_x\text{-} \qquad (X)$$

$$(\equiv Si)\text{-}R^2\text{-}[NR^3\text{-}R^4\text{-}]_gNR^3\text{-}CH(\text{-}CH_2\text{-}CO_2H)\text{-}CO_2\text{-}[CH_2\text{-}CH_2\text{-}O]_y\text{-}[CH\ (CH_3)\text{-}CH_2\text{-}O]_x\text{-}... \qquad (X')$$

und deren Mischungen
enthalten, wobei

$R^2$, $R^3$, $R^4$, x, y und g die oben dafür angegebene Bedeutung haben,
(Si≡) eine Verknüpfung über eine Si-C-Bindung zum Organopolysiloxan anzeigt.

Vorzugsweise ist die Asparaginatverbindungsgruppe über eine Siloxaneinheit der Formel

$$\text{-}SiR^*_dO_{(3-d)/2}$$

an das Organopolysiloxan gebunden,

wobei d 0, 1 oder 2, vorzugsweise 1 oder 2, ist und
R* die oben dafür angegebene Bedeutung hat.

Werden beispielsweise im zweiten Schritt des Verfahrens Organopolysiloxane (4) der Formel (IX) mit endständigen Aminogruppen X (wie Aminoethylaminopropylgruppen), eingesetzt, also solche der Formel

$$XR_2SiO(R_2SiO)_mSiR_2X \qquad (IX')$$

und mit Maleinsäurehalbestern (3) von monofunktionellen Polyethern, also mit Maleinsäurehalbestern der Formel (VI'), in Mengen von 1 Mol $\text{-}NH_2$-Gruppe in (4) je Mol C=C-Doppelbindung in (3) umgesetzt, werden Copolymere der Formel

$$R\text{-}\ [OCH_2CH(CH_3)]_x(OCH_2CH_2)_y\text{-}Y\text{-}R_2SiO(R_2SiO)_mSiR_2\text{-}Y\text{-}[CH_2CH_2O)_y[CH(CH_3)CH_2O)_x\text{-}R \qquad (XI)$$

erhalten, also Copolymere vom **A-B-A** Typ,
wobei R, X, Y, m, x und y die oben dafür angegebene Bedeutung haben.

Gegenstand der Erfindung sind weiterhin Emulsionen enthaltend

(i) erfindungsgemäße Siliconasparaginat-Copolymere
(ii) gegebenenfalls Emulgatoren und
(iii) Wasser.

Die Herstellung der erfindungsgemäßen Emulsionen erfolgt durch Mischen, bevorzugt intensives Mischen von den Komponenten (i), (ii) und (iii).
Technologien zur Herstellung von Emulsionen von Organopolysiloxanen sind bekannt. So kann das intensive Mischen in Rotor-Stator-Rührvorrichtungen, Kolloidmühlen oder in Hochdruckhomogenisatoren erfolgen.

Bei den erfindungsgemäßen Emulsionen wird Wasser, in Mengen von vorzugsweise 80 bis 400 Gew.-teile, besonders bevorzugt 100 bis 400 Gew.-teile, jeweils bezogen auf 100 Gew.-teile erfindungsgemäßen Siliconasparaginat-Copolymere (i), eingesetzt.

Als Emulgatoren (ii) können alle bisher bekannten, kationischen, anionischen und nicht-ionischen Emulgatoren sowohl einzeln als auch als Mischungen verschiedener Emulgatoren eingesetzt werden, mit denen auch bisher wässrige Emulsionen von Organopolysiloxanen hergestellt werden konnten.

Werden bei den erfindungsgemäßen Emulsionen Emulgatoren mitverwendet, werden sie in Mengen von vorzugsweise 0 bis 40 Gew.-teile, besonders bevorzugt 5 bis 20 Gew.-teile, jeweils bezogen auf 100 Gew.-teile erfindungsgemäßen Siliconasparaginat-Copolymere (i), eingesetzt.

Die erfindungsgemäßen Siliconasparaginat-Copolymere können, in Abhängigkeit von der gewählten Stöchiometrie wasserlöslich oder selbstemulgierend (sogenannte selbstemulgierende Systeme) eingestellt werden, d. h. sie erfordern für die Emulgierung keine weiteren Hilfsmittel.

Das erfindungsgemäße Verfahren hat den Vorteil, dass trotz der Unverträglichkeit der eingesetzten Edukte, des eher hydrophoben Aminosiliconpolymers (4) und des eher hydrophilen hydroxyfunktionellen Polymers (1), wie Polyether oder Polyester, wenn die hydroxyfunktionellen Polymere in Form ihrer Maleinsäurehalbester (3) eingesetzt werden, diese sich mit den Aminosiliconpolymeren (4) überraschenderweise spontan umsetzen, wobei die Umsetzung unter milden Reaktionsbedingungen, ohne Einsatz eines Katalysators, wie eines teuren Edelmetallkatalysators, erfolgt und wobei hohe Ausbeuten erzielt werden. In schneller Reaktion bilden sich aus den sonst kaum mischbaren Polymeredukten Copolymere, in denen diese Edukte über Asparaginatgruppen verbunden sind. Setzt man neutrale Maleinsäureester von Polyethern, also Diester, ein, ist praktisch keine merkliche Reaktion beobachtbar.
Weiterhin hat das erfindungsgemäße Verfahren den Vorteil, dass auch keine Stabilisatoren benötigt werden, um ungesättigte Edukte gegenüber Polymerisation zu stabilisieren.
Die erfindungsgemäßen Siliconasparaginat-Copolymere haben den Vorteil, dass die Aminosäuregruppe zwischen dem Siloxan- und dem organischen Polymer biologisch abbaubar ist, wodurch die tensidischen Eigenschaften der Copolymere wieder verschwinden.

<u>Herstellung der Maleinsäurehalbester:</u>

Maleinsäurehalbester M1:

150 g eines entwässerten Monomethylethers von Polyethylenglycol-2000 werden bei 60°C aufgeschmolzen und mit 7,3 g Maleinsäureanhydrid und 0,8 g Tributylamin vermischt. Man lässt 2 Stunden bei 100°C ausreagieren und heizt anschließend bei ca. 1 mbar aus. Es wird ein wachsartiges Produkt erhalten. Der Polyether ist laut 1H-NMR zu 81% in den Maleinhalbester umgesetzt.

Maleinsäurehalbester M2:

150 g eines entwässerten Polyethers der allgemeinen Formel $C_4H_9O(EO)_{16}(PO)_{11}H$ (EO=Ethylenoxygruppe, PO=Propylenoxygruppe) und einer OH-Zahl von 37,0 werden mit 10,5 g Maleinsäureanhydrid und 0,8 g Tributylamin 2 Stunden lang auf 100°C gehalten. Anschließend werden Maleinsäureanhydrid-Spuren in Vakuum entfernt. Das bräunliche Produkt enthält 84% des Maleinhalbesters des Polyethers.

Maleinsäurehalbester M3:

Ein Gemisch von 150 g des für M2 verwendeten Polyethers und 150 g eines höher molekularen Polyethers der allgemeinen Formel $C_4H_9O(EO)_{35}(PO)_{24}H$ und einer OH-Zahl von 16,75 (beide entwässert) werden mit 14,1 g Maleinsäureanhydrid und 1,6 g Tributylamin 2 Stunden gehalten. Danach wird im Vakuum ausgeheizt. Es wird ein klarer, leicht bräunlicher Polyethermaleinhalbester mit einer C=C-Konzentration von 0,45 mEquiv./g erhalten.

Maleinsäurehalbester M4:

456 g des zuvor entwässerten EO/PO-Polyetherdiols mit einer OH-Zahl von 59,6 (erhältlich als Pluronic PE 3500 bei BASF) werden mit 23,8 g Maleinsäureanhydrid und 2,4 g Tributylamin 2 Stunden lang auf 100°C erwärmt. Anschließend wird im Vakuum ausgeheizt. Es wird im Durchschnitt nur eine OH-Gruppe des Polyetherdiols umgesetzt. Das Produkt enthält eine C=C-Konzentration von 0,503 mEquiv./g.

Maleinsäurehalbester M5:

Ähnlich wie bei der Herstellung von M4 werden 300 g eines entwässerten EO/PO-Polyetherdiols mit einer OH-Zahl von 40,4 (erhältlich als Pluronic PE 6400 bei BASF) mit 10,1 g Maleinsäureanhydrid und 1,6 g Tributylamin 2 Stunden bei 100°C umgesetzt und danach wird im Vakuum ausgeheizt. Auch hier wird im Durchschnitt nur eine OH-Gruppe verestert. Die Doppelbindungskonzentration beträgt rund 0,33 mEquiv./g.

Herstellung der Siliconcopolymere:

Beispiel 1: Copolymer 1

163,4 g eines Aminosiloxans aus Aminoethylaminopropylmethylsiloxan- und Dimethylsiloxaneinheiten mit einem Gemisch aus endständigen Methoxy- und Hydroxygruppen, einer Aminzahl von 0,291 und einer Viskosität von 1280 $mm^2/s$ (25°C) werden mit 44 g Dowanol DPM homogenisiert und dann nach Erwärmen auf 60°C mit 12,4 g Maleinsäurehalbester M1 vermischt (Amin/Maleinat = 4/1). Die zunächst weißlich trübe Mischung wird in ca. einer Minute homogen mit leicht opalem Aussehen.
Nach 2 Stunden bei 60°C wird im $^1$H-NMR der Umsatz des Maleinrestes mit den Aminogruppen bestimmt. Die Signale für die ungesättigten Protonen der -HC=CH-Gruppe des Halbesters im Bereich 6 - 7ppm sind nahezu komplett verschwunden. Der Umsatz beträgt mehr als 95%. Damit sind ca. 25% aller Amingruppen in Asparaginsäureester überführt.

Beispiel 2: Copolymer 2a

150 g eines Aminosiloxans aus Aminopropyldimethylsiloxan- und Dimethylsiloxaneinheiten mit einer Aminzahl von 0,191 werden mit 42,9 g Dowanol DPM verdünnt und bei 60°C mit 21,6 g Maleinsäurehalbester M2 versetzt (Amin/Maleinat = 2/1). Die zunächst sehr trübe Mischung klart bei leicht exothermer Reaktion nach ca. 20 Minuten auf, wobei das Reaktionsgemisch erheblich viskoser wird. Nach weiteren 100 Minuten kühlt man ab. Es wird eine farblose klare 80%-ige Copolymerlösung mit einer Viskosität von 1540 $mm^2/s$ (25°C) erhalten. Der Umsatz an Maleinatgruppen beträgt über 95%.

Beispiel 3: Copolymer 2b

Die Herstellmethode für Copolymer 2a wird wiederholt mit dem Unterschied, dass 34,2 g Maleinsäurehalbester M2 eingesetzt werden, wodurch sich ein Amin/Maleinatverhältnis von 1,2/1 ergibt. Der Umsatz der Maleinatgruppen beträgt auch hier über 95%, die Viskosität der Copolymerlösung 8500 $mm^2/s$ (25°C).

Beispiel 4: Copolymere 3a-c

150 g eines Aminosiloxans aus Aminoethylaminopropyldimethylsiloxan- und Dimethylsiloxan-einheiten mit einer Aminzahl von 0,395 werden in der in der Tabelle angegebenen Verdünnung in Dowanol DPM mit den ebenfalls in der Tabelle angegebenen Mengen des Maleinsäurehalbesters M3 bei 60°C zwei Stunden lang umgesetzt.

Tabelle:

| Copolymer | Menge M3 in g | Verhältnis $NH_2$/C=C | Menge DPM in g | Lösung | homogen | Umsatz | Viskosität mPa·s (25°C) |
|---|---|---|---|---|---|---|---|
| 3a | 32,6 | 2,0 | 45,6 | 80% | nach 0, 3h | 93% | 1600 |
| 3b | 43,4 | 1,5 | 48,4 | 80% | sofort | >95% | 4000 |
| 3c | 65,2 | 1,0 | 92,2 | 70% | sofort | >95% | 4100 |

Copolymere mit A-B-A-Struktur, wobei das Polyethermaleinat jeweils an die Endgruppen des Aminosiloxans addiert wird, können bei gutem Umsatz mit verschiedenem Derivatisierungsgrad hergestellt werden. Je höher dieser gewählt wird, um so hydrophiler wird das Copolymer, um so höher fällt auch die Viskosität aus.

Beispiel 5: Copolymer 4

75 g eines Aminosiloxans aus Aminopropyldimethylsiloxan- und Dimethylsiloxaneinheiten mit der Aminzahl von 0,289 werden mit 118 g Diethylenglycolmonobutylether verdünnt und auf 60°C erwärmt. In 2 Minuten werden 43,1 g des Maleinsäurehalbesters M4 zudosiert. Die anfänglich sehr trübe Reaktionslösung ist kurz nach dem Ende des Zudosierens bereits klar, wird aber noch 2 Stunden auf 60°C gehalten. Die klare Lösung enthält ca. 50 Gew.-% Copolymer, das zu etwa 60% aus Siloxan besteht.

Beispiel 6: Emulsion von Copolymer 4:

43,1 g des Maleinsäurehalbesters M4 werden mit 111 g Wasser zu einer klaren Lösung verdünnt. Hierzu dosiert man unter gutem Rühren eine Lösung von 75 g des bei der Herstellung des Copolymers 4 eingesetzten Aminosiloxans in 82,5 g n-Amylalkohol. Es wird eine sehr viskose Emulsion erhalten, die sich problemlos mit Wasser verdünnen lässt.

Beispiel 7: Copolymer 5

120 g des zur Herstellung der Copolymere 3a-c verwendeten Aminosiloxans der Aminzahl 0,395 werden mit 127,6 g Dowanol DPM verdünnt und auf 60°C erwärmt. Man dosiert dann 71,5 g des Maleinsäurehalbesters M3 zu, wobei die erst trübe Mischung nach wenigen Minuten aufklart. Nach 2 weiteren Stunden bei 60°C wird gemäß $^1$H-NMR ein Umsatz der Maleingruppen von ca. 96% erzielt. Die Lösung ist 40%-ig an Copolymer und hat eine Viskosität von 1450 $mm^2/s$ (25°C).

83,3 g dieser Copolymerlösung werden bei 50°C vorgelegt. Man lässt langsam 166,7 g Wasser zulaufen und erhält eine sehr feinteilige Emulsion mit 20 Gew.-% Copolymergehalt.

## Patentansprüche

1. Verfahren zur Herstellung von Siliconasparaginat-Copolymere indem in einem ersten Schritt ein mindestens eine Hydroxygruppe aufweisendes organisches Polymer (1) der allgemeinen Formel

$$R^6\text{-}[O\text{-}CH_2\text{-}CH(CH_3)]_x\text{-}[O\text{-}CH_2\text{-}CH_2]_y\text{-}O\text{-}H \qquad (V),$$

wobei

R ein einwertiger Kohlenwasserstoffrest mit 1 bis 18 C-Atomen bedeutet,
$R^6$ ein Wasserstoffatom, ein Rest R oder ein Rest der Formel $R^7$-C(O)- bedeutet,
$R^7$ einen $C_1$-$C_{18}$-Alkylrest bedeutet,
x 0 oder eine ganze Zahl von 1 bis 100 ist und
y 0 oder eine ganze Zahl von 1 bis 100 ist,

mit der Maßgabe, dass die Summe x+y mindestens 3 ist,
mit Maleinsäureanhydrid (2)

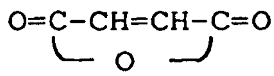 (I)

umgesetzt wird,
mit der Maßgabe, dass Maleinsäureanhydrid in Mengen von 0,5 bis 1,1 Mol je Mol Hydroxygruppe (-OH) im Polymer (1) eingesetzt wird,
wobei ein Maleinsäurehalbester (3) der Formel

$$HO\text{-}(O{=})C\text{-}CH{=}CH\text{-}C({=}O)\text{-}O\text{-}[CH_2\text{-}CH_2\text{-}O]_y\text{-}[CH(CH_3)\text{-}CH_2\text{-}O]_x\text{-}R^6 \qquad (VI)$$

erhalten wird,
wobei $R^6$, x und y die oben dafür angegebene Bedeutung haben, und in einem zweiten Schritt der aus dem ersten Schritt erhaltene Maleinsäurehalbester (3) mit einem mindestens eine primäre oder sekundäre Aminogruppe (-NH-) aufweisendem Organopolysiloxan (4) umgesetzt wird,
wobei die primäre oder sekundäre Aminogruppe eine Si-C gebundene Gruppe **X** der allgemeinen Formel

$$-R^2\text{-}[NR^3\text{-}R^4\text{-}]_gNHR^3 \qquad (VII)$$

ist, wobei

$R^2$ ein zweiwertiger linearer oder verzweigter Kohlenwasserstoffrest mit 1 bis 18 Kohlenstoffatomen bedeutet,
$R^3$ ein Wasserstoffatom oder einen einwertigen Kohlenwasserstoffrest mit 1 bis 18 C-Atomen, vorzugsweise

einen $C_1$-$C_4$-Alkylrest, oder einen Acylrest bedeutet, bevorzugt ein Wasserstoffatom ist,
$R^4$ ein zweiwertiger Kohlenwasserstoffrest mit 1 bis 6 Kohlenstoffatomen bedeutet,
g 0, 1, 2, 3 oder 4, vorzugsweise 0 oder 1, ist,

mit der Maßgabe, dass das Organopolysiloxan (4) in Mengen von 1 bis 10 Mol, vorzugsweise 1 bis 3 Mol, Aminogruppe (-NH-) in (4) je Mol C=C-Doppelbindung im Maleinsäurehalbester (3) eingesetzt wird, wobei Siliconasparaginat-Copolymere erhalten werden, die je Molekül mindestens eine Asparaginatverbindungsgruppe **Y** ausgewählt aus der Gruppe der Formeln

$$(\Xi Si)\text{-}R^2\text{-}[NR^3\text{-}R^4\text{-}]_g NR^3\text{-}CH\ (\text{-}CO_2H)\text{-}CH_2\text{-}CO_2\text{-}[CH_2\text{-}CH_2\text{-}O]_y\text{-}[CH(CH_3)\text{-}CH_2\text{-}O]_x\text{-} \qquad (X)$$

$$(\Xi Si)\ \text{-}R^2\text{-}[NR^3\text{-}R^4\text{-}]_g NR^3\text{-}CH(\text{-}CH_2\text{-}CO_2H)\text{-}CO_2\text{-}[CH_2\text{-}CH_2\text{-}O]_y\text{-}[CH(CH_3)\text{-}CH_2\text{-}O]_x\text{-} \qquad (X')$$

und deren Mischungen
enthalten, wobei

$R^2$, $R^3$, $R^4$, x, y und g die oben dafür angegebene Bedeutung haben und
(SiΞ) eine Verknüpfung über eine Si-C-Bindung zum Organopolysiloxan anzeigt.

**2.** Verfahren nach Anspruch 1, **dadurch gekennzeichnet, dass** in Formel (V) die Summe x+y 8 bis 80 ist.

**3.** Verfahren nach Anspruch 1 oder 2, **dadurch gekennzeichnet, dass** als Organopolysiloxan (4) solches der allgemeinen Formel

$$X_aR_b(R'O)_cSiO_{\frac{4-(a+b+c)}{2}} \qquad (VIII)$$

eingesetzt wird, wobei

X ein Si-C gebundener Rest der Formel

$$\text{-}R^2\text{-}[NR3\text{-}R^4\text{-}]_g NHR^3 \qquad (VII)$$

ist,
R ein einwertiger Kohlenwasserstoffrest mit 1 bis 18 C-Atomen bedeutet,
R' ein Wasserstoffatom oder einen einwertigen Kohlenwasserstoffrest mit 1 bis 18 C-Atomen, vorzugsweise einen $C_1$-$C_4$-Alkylrest, bedeutet,
$R^2$ ein zweiwertiger linearer oder verzweigter Kohlenwasserstoffrest mit 1 bis 18 Kohlenstoffatomen bedeutet,
$R^3$ ein Wasserstoffatom oder einen einwertigen Kohlenwasserstoffrest mit 1 bis 18 C-Atomen, vorzugsweise einen $C_1$-$C_4$-Alkylrest, oder einen Acylrest bedeutet, bevorzugt ein Wasserstoffatom ist,
$R^4$ ein zweiwertiger Kohlenwasserstoffrest mit 1 bis 6 Kohlenstoffatomen bedeutet,
a 0 oder 1 ist,
b 0, 1, 2, oder 3 ist,
c 0 oder 1 ist,
g 0, 1, 2, 3 oder 4, vorzugsweise 0 oder 1, ist,

mit der Maßgabe, dass die Summe $a+b+c \leq 3$ ist, und
dass die Organopolysiloxane mindestens einen Rest X je Molekül enthalten.

**4.** Verfahren nach einem der Ansprüche 1 bis 3, **dadurch gekennzeichnet, dass** als Organopolysiloxan (4) solches der allgemeinen Formel

$$X_kR^*_{3-k}SiO(R_2SiO)_m(XR^*SiO)_nSiR^*_{3-k}X)_k \qquad (IX)$$

eingesetzt wird, wobei.

X die im Anspruch 3 dafür angegebene Bedeutung hat,

R ein einwertiger Kohlenwasserstoffrest mit 1 bis 18 C-Atomen bedeutet,
R* R oder ein Rest der Formel -OR' bedeutet,
R' ein Wasserstoffatom oder einen einwertigen Kohlenwasserstoffrest mit 1 bis 18 C-Atomen, vorzugsweise einen $C_1$-$C_4$-Alkylrest, bedeutet,
k 0 oder 1 ist,
m 0 oder eine ganze Zahl von 1 bis 1000 ist,
n 0 oder eine ganze Zahl von 1 bis 50 ist,

mit der Maßgabe, dass die Organopolysiloxane mindestens einen Rest X je Molekül enthalten.

**5.** Siliconasparaginat-Copolymere, die je Molekül mindestens eine Asparaginatverbindungsgruppe **Y** ausgewählt aus der Gruppe der Formeln

$$(\Xi Si)\text{-}R^2\text{-}[NR^3\text{-}R^4\text{-}]_g NR^3\text{-}CH(\text{-}CO_2H)\text{-}CH_2\text{-}CO_2\text{-}[CH_2\text{-}CH_2\text{-}O]_y\text{-}[CH(CH_3)\text{-}CH_2\text{-}O]_x\text{-} \quad (X)$$

$$(\Xi Si)\text{-}R^2\text{-}[NR^3\text{-}R^4\text{-}]_g NR^3\text{-}CH(\text{-}CH_2\text{-}CO_2H)\text{-}CO_2\text{-}[CH_2\text{-}CH_2\text{-}O]_y\text{-}[CH(CH_3\text{-}CH_2\text{-}O]_x\text{-} \quad (X')$$

und deren Mischungen
enthalten, wobei

$R^2$, $R^3$, $R^4$, x, y und g die im Anspruch 1 dafür angegebene Bedeutung haben und
($Si\Xi$) eine Verknüpfung über eine Si-C-Bindung zum Organopolysiloxan anzeigt.

**6.** Emulsionen enthaltend

(i) Siliconasparaginat-Copolymere nach Anspruch 5 oder hergestellt nach einem der Ansprüche 1 bis 4,
(ii) gegebenenfalls Emulgatoren und
(iii) Wasser.

## Claims

**1.** Process for preparing silicone aspartate copolymers by, in a first step,
reacting an organic polymer (1) of the general formula

$$R^6\text{-}[O\text{-}CH_2\text{-}CH(CH_3)]_x\text{-}[O\text{-}CH_2\text{-}CH_2]_y\text{-}O\text{-}H \quad (V)$$

where

R is a monovalent hydrocarbon radical having 1 to 18 carbon atoms,
$R^6$ is a hydrogen atom, a radical R or a radical of the formula $R^7$-C(O)-,
$R^7$ is a $C_1$-$C_{18}$-alkyl radical,
x is 0 or an integer from 1 to 100 and
y is 0 or an integer from 1 to 100,

with the proviso that the sum x+y is at least 3, having at least one hydroxyl group
with maleic anhydride (2)

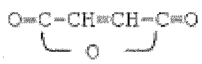
(I)

with the proviso that maleic anhydride is used in amounts of 0.5 to 1.1 mol per mole of hydroxyl group (-OH) in the polymer (1),
where a maleic monoester (3) of the formula

$$HO\text{-}(O=)C\text{-}CH=CH\text{-}C(=O)\text{-}O\text{-}[CH_2\text{-}CH_2\text{-}O]_y\text{-}[CH(CH_3)\text{-}CH_2\text{-}O]_x\text{-}R^6 \quad (VI)$$

is obtained,
where $R^6$, x and y have the meaning given for them above, and, in a second step,
reacting the maleic monoester (3) obtained from the first step with an organopolysiloxane (4) having at least one primary or secondary amino group (-NH-), where the primary or secondary amino group is an Si-C bonded group **X** of the general formula

$$-R^2-[NR^3-R^4-]_gNHR^3 \qquad (VII)$$

where

$R^2$ is a divalent linear or branched hydrocarbon radical having 1 to 18 carbon atoms,
$R^3$ is a hydrogen atom or a monovalent hydrocarbon radical having 1 to 18 carbon atoms, preferably a $C_1$-$C_4$-alkyl radical, or an acyl radical, preferably a hydrogen atom,
$R^4$ is a divalent hydrocarbon radical having 1 to 6 carbon atoms,
g is 0, 1, 2, 3 or 4, preferably 0 or 1,

with the proviso that the organopolysiloxane (4) is used in amounts of 1 to 10 mol, preferably 1 to 3 mol, of amino group (-NH-) in (4) per mole of C=C double bond in the maleic monoester (3),
where silicone aspartate copolymers are obtained which contain, per molecule, at least one aspartate compound group **Y** selected from the group of the formulae

$$(\equiv Si)-R_2-[NR^3-R^4-]_gNR^3-CH(-CO_2H)-CH_2-CO_2-[CH_2-CH_2-O]_y-[CH(CH_3)-CH_2-O]_x- \qquad (X)$$

$$(\equiv Si)-R^2-[NR^3-R^4-]_gNR^3-CH(-CH_2-CO_2H)-CO_2-[CH_2-CH_2-O]_y-[CH(CH_3)-CH_2-O]_x- \qquad (X')$$

and mixtures thereof,
where

$R^2$, $R^3$, $R^4$, x, y and g have the meaning given for them above and
(Si≡) indicates a linkage via an Si-C bond to the organopolysiloxane.

**2.** Process according to claim 1, **characterized in that** in formula (V) the sum x+y is 8 to 80.

**3.** Process according to Claim 1 or 2, **characterized in that** the organopolysiloxane (4) used is one of the general formula

$$X_aR_b(R'O)_cSiO_{\frac{4-(a+b+c)}{2}} \qquad (VIII)$$

where

X is an Si-C bonded radical of the formula

$$-R^2-[NR^3-R^4-]_gNHR^3 \qquad (VII),$$

R is a monovalent hydrocarbon radical having 1 to 18 carbon atoms,
R' is a hydrogen atom or a monovalent hydrocarbon radical having 1 to 18 carbon atoms, preferably a $C_1$-$C_4$-alkyl radical,
$R^2$ is a divalent linear or branched hydrocarbon radical having 1 to 18 carbon atoms,
$R^3$ is a hydrogen atom or a monovalent hydrocarbon radical having 1 to 18 carbon atoms, preferably a $C_1$-$C_4$-alkyl radical, or an acyl radical, preferably a hydrogen atom,
$R^4$ is a divalent hydrocarbon radical having 1 to 6 carbon atoms,
a is 0 or 1,
b is 0, 1, 2 or 3,
c is 0 or 1,
g is 0, 1, 2, 3 or 4, preferably 0 or 1,

with the proviso that the sum a+b+c is ≤3, and that the organopolysiloxanes contain at least one radical X per molecule.

**4.** Process according to any one of Claims 1 to 3, **characterized in that** the organopolysiloxane (4) used is one of the general formula

$$X_kR^*_{3-k}SiO(R_2SiO)_m(XR^*SiO)_nSiR^*_{3-k}X_k \qquad (IX)$$

where

X has the meaning given for it in Claim 3,
R is a monovalent hydrocarbon radical having 1 to 18 carbon atoms,
R* is R or a radical of the formula -OR',
R' is a hydrogen atom or a monovalent hydrocarbon radical having 1 to 18 carbon atoms, preferably a $C_1$-$C_4$-alkyl radical,
k is 0 or 1,
m is 0 or an integer from 1 to 1000,
n is 0 or an integer from 1 to 50,

with the proviso that the organopolysiloxanes contain at least one radical X per molecule.

**5.** Silicone aspartate copolymers which contain, per molecule, at least one aspartate compound group **Y** selected from the group of the formulae

$$(\equiv Si)\ -R^2-[NR^3-R^4-]_gNR^3-CH(-CO_2H)-CH_2-CO_2-[CH_2-CH_2-O]_y-[CH\ (CH_3)-CH_2-O]_x- \qquad (X)$$

$$(\equiv Si)\ -R^2-[NR^3-R^4-]_gNR^3-CH(-CH_2-CO_2H)-CO_2-[CH_2-CH_2-O]_y-[CH\ (CH_3)-CH_2-O]_x- \qquad (X')$$

and mixtures thereof,
where

$R^2$, $R^3$, $R^4$, x, y and g have the meaning given for them in claim 1 and
(SiΞ indicates a linkage via an Si-C bond to the organopolysiloxane.

**6.** Emulsions comprising

(i) silicone aspartate copolymers according to Claim 5 or prepared according to any one of Claims 1 to 4,
(ii) optionally emulsifiers and
(iii)water.

## Revendications

**1.** Procédé pour la préparation de copolymères silicone/asparaginate, par dans une première étape mise en réaction d'un polymère organique (1) comportant au moins un groupe hydroxy, de formule générale

$$R^6-[O-CH_2-CH(CH_3)]_x-[O-CH_2-CH_2]_y-O-H \qquad (V),$$

dans laquelle

R représente un radical hydrocarboné monovalent ayant de 1 à 18 atomes de carbone,
$R^6$ représente un atome d'hydrogène, un radical R ou un radical de formule $R^7$-C(O)-,
$R^7$ représente un radical alkyle en $C_1$-$C_{18}$,
x est 0 ou un nombre entier valant de 1 à 100 et
y est 0 ou un nombre entier valant de 1 à 100,

étant entendu que la somme x+y est au moins égale à 3, avec de l'anhydride maléique (2)

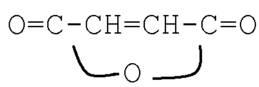 (I)

étant entendu qu'on utilise l'anhydride maléique en des quantités de 0,5 à 1,1 mole par mole de groupe hydroxy (-OH) dans le polymère (1),
pour l'obtention d'un hémiester d'acide maléique (3) de formule

$$HO\text{-}(O=)C\text{-}CH=CH\text{-}C(=O)\text{-}O\text{-}[CH_2\text{-}CH_2\text{-}O]_y\text{-}[CH(CH_3)\text{-}CH_2\text{-}O]_x\text{-}R^6 \quad (VI),$$

$R^6$, x et y ayant la signification indiquée plus haut pour ces symboles,
et dans une deuxième étape
mise en réaction de l'hémiester d'acide maléique (3), obtenu dans la première étape, avec un organopolysiloxane (4) comportant au moins un groupe amino (-NH-) primaire ou secondaire,
le groupe amino primaire ou secondaire étant un groupe **X** lié par une liaison Si-C, de formule générale

$$-R^2\text{-}[NR^3\text{-}R^4\text{-}]_gNHR^3 \quad ((VII)$$

dans laquelle

$R^2$ représente un radical hydrocarboné divalent linéaire ou ramifié ayant de 1 à 18 atomes de carbone,
$R^3$ représente un atome d'hydrogène ou un radical hydrocarboné monovalent ayant de 1 à 18 atomes de carbone, de préférence un radical alkyle en $C_1$-$C_4$, ou un radical acyle, de préférence est un atome d'hydrogène,
$R^4$ représente un radical hydrocarboné divalent ayant de 1 à 6 atomes de carbone,
g est 0, 1, 2, 3 ou 4, de préférence 0 ou 1,

étant entendu que l'organopolysiloxane (4) est utilisé en des quantités de 1 à 10 moles, de préférence de 1 à 3 moles, de groupe amino (-NH-) dans (4) par mole de double liaison C=C dans l'hémiester d'acide maléique (3), pour l'obtention de copolymères silicone/asparaginate qui contiennent par molécule au moins un groupe de liaison à l'asparaginate **Y** choisi dans le groupe des formules

$$(\equiv Si)\text{-}R^2\text{-}[NR^3\text{-}R^4\text{-}]_gNR^3\text{-}CH(\text{-}CO_2H)\text{-}CH_2\text{-}CO_2\text{-}[CH_2\text{-}CH_2\text{-}O]_y\text{-}[CH(CH_3)\text{-}CH_2\text{-}O]_x\text{-} \quad (X)$$

7 $$(\equiv Si)\text{-}R^2\text{-}[NR^3\text{-}R^4\text{-}]_gNR^3\text{-}CH(\text{-}CH_2\text{-}CO_2H)\text{-}CO_2\text{-}[CH_2\text{-}CH_2\text{-}O]_y\text{-}[CH(CH_3)\text{-}CH_2\text{-}O]_x\text{-} \quad (X')$$

et leurs mélanges,

$R^2$, $R^3$, $R^4$, x, y et g ayant la signification indiquée plus haut pour ces symboles et
(Si≡) indiquant un attachement par une liaison Si-C à l'organopolysiloxane.

2. Procédé selon la revendication 1, **caractérisé en ce que** dans la formule (V) la somme x+y vaut de 8 à 80.

3. Procédé selon la revendication 1 ou 2, **caractérisé en ce qu'**on utilise comme organopolysiloxane (4) celui de formule générale

$$X_aR_b(R'O)_cSiO_{\frac{4-(a+b+c)}{2}} \quad (VIII)$$

dans laquelle

X est un radical lié par une liaison Si-C, de formule

$$-R^2\text{-}[NR^3\text{-}R^4\text{-}]_gNHR^3 \quad (VII),$$

R représente un radical hydrocarboné monovalent ayant de 1 à 18 atomes de carbone,
R' représente atome d'hydrogène ou un radical hydrocarboné monovalent ayant de 1 à 18 atomes de carbone, de préférence un radical alkyle en $C_1$-$C_4$,
$R^2$ représente un radical hydrocarboné divalent linéaire ou ramifié ayant de 1 à 18 atomes de carbone,
$R^3$ représente un atome d'hydrogène ou un radical hydrocarboné monovalent ayant de 1 à 18 atomes de carbone, de préférence un radical alkyle en $C_1$-$C_4$, ou un radical acyle, de préférence est un atome d'hydrogène,
$R^4$ représente un radical hydrocarboné divalent ayant de 1 à 6 atomes de carbone,

a est 0 ou 1,
b est 0, 1, 2 ou 3,
c est 0 ou 1,
g est 0, 1, 2, 3 ou 4, de préférence 0 ou 1,

étant entendu que la somme a+b+c est $\leq$ 3, et
que les organopolysiloxanes contiennent au moins un radical X par molécule.

**4.** Procédé selon l'une quelconque des revendications 1 à 3, **caractérisé en ce qu'**on utilise comme organopolysiloxane (4) celui de formule générale

$$X_kR^*_{3-k}SiO(R_2SiO)_m(XR^*SiO)_nSiR^*_{3-k}X_k \qquad (IX)$$

dans laquelle

X a la signification indiquée pour ce symbole dans la revendication 3,
R représente un radical hydrocarboné monovalent ayant de 1 à 18 atomes de carbone,
R* représente R ou un radical de formule OR',
R' représente un atome d'hydrogène ou un radical hydrocarboné monovalent ayant de 1 à 18 atomes de carbone, de préférence un radical alkyle en $C_1$-$C_4$,
k est 0 ou 1,
m est 0 ou un nombre entier valant de 1 à 1 000,
n est 0 ou un nombre entier valant de 1 à 50,

étant entendu que les organopolysiloxanes contiennent au moins un radical X par molécule.

**5.** Copolymères silicone/asparaginate qui contiennent par molécule
au moins un groupe de liaison à l'asparaginate **Y** choisi dans le groupe des formules

$$(\equiv Si)\text{-}R^2\text{-}[NR^3\text{-}R^4\text{-}]_gNR^3\text{-}CH(\text{-}CO_2H)\text{-}CH_2\text{-}CO_2\text{-}[CH_2\text{-}CH_2\text{-}O]_y\text{-}[CH(CH_3)\text{-}CH_2\text{-}O]_x\text{-} \qquad (X)$$

$$(\equiv Si)\text{-}R^2\text{-}[NR^3\text{-}R^4\text{-}]_gNR^3\text{-}CH(\text{-}CH_2\text{-}CO_2H)\text{-}CO_2\text{-}[CH_2\text{-}CH_2\text{-}O]_y\text{-}[CH(CH_3)\text{-}CH_2\text{-}O]_x\text{-} \qquad (X')$$

et leurs mélanges,

$R^2$, $R^3$, $R^4$, x, y et g ayant la signification indiquée dans la revendication 1 pour ces symboles et
(Si≡) indiquant un attachement par une liaison Si-C à l'organopolysiloxane.

**6.** Émulsions contenant

(i) des copolymères silicone/asparaginate selon la revendication 5 ou préparés selon l'une quelconque des revendications 1 à 4,
(ii) éventuellement des émulsifiants et
(iii) de l'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6664342 B1
- US 5990334 A
- EP 324595 B1
- US 4814392 A